# EUROPÄISCHE PATENTSCHRIFT

(11) **EP 3 819 510 B1**
(45) Veröffentlichungstag und Bekanntmachung des Hinweises auf die Patenterteilung: **10.08.2022**
(21) Anmeldenummer: 20206374.9
(22) Anmeldetag: 09.11.2020
(51) Int. Cl.: F16C 19/38, F16C 33/78, F16J 15/34, F16C 43/04

(54) **WÄLZLAGERANORDNUNG**
ROLLER BEARING ARRANGEMENT
AGENCEMENT DE PALIER À ROULEMENT

(30) Priorität: 11.11.2019 DE 102019217379
(43) Veröffentlichungstag der Anmeldung: 12.05.2021
(73) Patentinhaber: Aktiebolaget SKF, 415 50 Göteborg (SE)
(72) Erfinder: Kroeger, Jan, 25337 Elmshorn (DE); Lemper, Peter, 29456 Hitzacker (DE); Liesegang, Hans-Jürgen, 26419 Schortens (DE); Schulz, Klaus-Dieter, 29479 Jameln (DE)
(74) Vertreter: Kuhstrebe, Jochen

(56) Entgegenhaltungen:
- EP-A1- 1 873 428
- EP-A1- 2 527 694
- EP-A1- 3 173 643
- WO-A1-2018/185288
- DE-A1- 19 958 788
- DE-A1-102010 053 203
- DE-A1-102011 121 281
- DE-U1- 20 203 372
- DE-U1-202011 109 164
- JP-A- 2011 089 619

## Beschreibung

Vorliegende Erfindung betrifft eine Wälzlageranordnung, insbesondere ein zweireihiges Kegelrollenlager gemäß dem Oberbegriff vom Patentanspruch 1, wobei die Wälzlageranordnung insbesondere einen Durchmesser von mehr als einem Meter aufweist.

Als Großwälzlager werden im Folgenden Lager bezeichnet, die einen Außenring mit einem Durchmesser von mehr als einem Meter aufweisen. Es können auch andere Kriterien und insbesondere auch andere Durchmesserwerte für die Definition von Großwälzlagern herangezogen werden. Entscheidend ist jedenfalls, dass es sich um Lager handelt, die deutlich größer sind als solche, die üblicherweise in Alltagsanwendungen, wie Beispielsweise bei Pkws eingesetzt werden und die einen Außendurchmesser von einigen Zentimetern aufweisen.

Großwälzlager werden üblicherweise in der Schwerindustrie, wie beispielsweise Windkraftanlagen, Tunnelbohrmaschinen, Walzenlagerungen etc., eingesetzt und müssen oft in besonders schwierigen Umgebungen arbeiten.

Bei der Konstruktion von Großwälzlagern ist deshalb ein reines Hochskalieren der Lagergeometrie ausgehend von einem bekannten kleinen Lager in der Regel nicht möglich, da neben den extremen Umweltbedingungen, Großwälzlager, auch andere Anforderungen an Gewicht, Montage und Reparatur aufweisen.

Eine weitere Problematik bei derartigen Großwälzlagern ist die Abdichtung des Lagerinnenraums. Aufgrund der großen Abmessungen treten schon bei sehr geringen Unwuchten der zueinander drehenden Bauteile große Schwankungen auf, die dazu führen, dass die Anlage von Dichtungen an dem jeweiligen anderen Bauteil, und damit eine ausreichende Abdichtung nicht immer gewährleistet ist. Es werden im Stand der Technik deshalb radialwirkende Dichtungen eingesetzt, die auch als Radialwellendichtungen bekannt sind, bei denen eine zusätzliche Feder die radial anliegende Dichtlippe gegen die Anlauffläche drückt. Dabei stellt das Federelement sicher, dass die Dichtlippe auch bei Unwuchten oder Fertigkeitsungenauigkeiten der Bauteile sicher an der entsprechenden Anlauffläche anläuft und der Innenraum des Lagers in allen Betriebszuständen sicher abgedichtet ist.

Nachteilig bei derartigen Radialwellendichtringen ist jedoch, dass diese lediglich die Anlage sicherstellen, nicht jedoch einen übermäßigen Anlagedruck kompensieren können, sodass derartige Radialwellendichtringe oft verschleißen und ausgetauscht werden müssen. Um den Verschleiß der Radialwellendichtringe möglichst gering zu halten, ist weiterhin aus dem Stand der Technik bekannt, einen Anlaufring bereitzustellen, an dem die Radialwellendichtringe anlaufen können. Dieser ist dazu ausgelegt, Unwuchten auszugleichen, muss aber zusätzlich hergestellt werden, was die Produktion und Herstellung der Lagerringe deutlich erhöht und kostenintensiv macht. Des Weiteren muss bei derartigen zusätzlichen Hülsen sichergestellt werden, dass diese eine extra gefertigte Anlauffläche aufweisen, was ebenfalls die Produktionskosten in die Höhe treibt.

Aufgabe vorliegender Erfindung es ist deshalb, eine Wälzlageranordnung, insbesondere für eine Windkraftanlage, bereitzustellen, die eine Abdichtung des Lagerinnenraums ermöglicht, bei der die Dichtung über die gesamte Lebensdauer des Lagers eingesetzt werden kann bzw. ein Verschleiß der Dichtlippen reduziert werden kann und gleichzeitig die Kosten reduziert werden.

Diese Aufgabe wird durch eine Wälzlageranordnung gemäß Patentanspruch 1 gelöst. Eine Wälzlageranordnung mit den Merkmalen des Oberbegriffs des Anspruchs 1 ist aus der DE 199 58 788 A1 bekannt.

Im Folgenden wird eine Wälzlageranordnung mit einem ersten Lagerring und einem zweiten Lagerring vorgestellt, die zwischen sich einen Lagerinnenraum bilden, in dem Wälzkörper angeordnet sind, um eine relative Verdrehung von ersten und zweiten Lagerringen zu ermöglichen. Eine derartige Wälzlageranordnung kann insbesondere ein zweireihiges Kegelrollenlager sein. Des Weiteren ist eine derartige Wälzlageranordnung insbesondere für die Schwerindustrie einsetzbar, wobei der erste und/oder der zweite Lagerring einen Durchmesser von mehr als einem Meter aufweisen. Zum Abdichten des Lagerinnenraums weist das Wälzlager weiterhin eine Dichtanordnung auf, wobei die Dichtanordnung einen Dichtungsträger, der drehfest mit dem ersten Lagerring verbunden ist und ein Dichtungselement, das drehfest mit dem Dichtungsträger verbunden ist, aufweist. Derartige Dichtungsträger werden üblicherweise dann eingesetzt, wenn der Außenring im Vergleich zum Innenring relativ schmal ausgebildet ist, um Gewicht zu sparen. Dafür ist jedoch nötig, die Abdichtungssituation der Lagerringe bzw. des Lagerinnenraums neu auszugestalten wobei trotzdem die Dichtanordnung einen ausreichenden Abstand zu den im Lagerinnenraum beinhalteten Wälzkörpern und den Wälzkörper haltenden Käfigen haben muss.

Um eine zuverlässige, kostengünstige und verschleißarme Abdichtung für das Wälzlager bereitzustellen, weist das Dichtungselement weiterhin zumindest eine primäre Dichtlippe zum Abdichten des Innenraums und eine sekundäre Dichtlippe zum Abdichten gegen externe Kontaminationen auf, wobei das Dichtungselement drehfest mit dem Dichtungsträger verbunden ist. Weiterhin liegt die primäre und die sekundäre Dichtlippe axial dichtend an der Stirnfläche des zweiten Lagerrings an, sodass zum einen eine zuverlässige Abdichtung sichergestellt ist, zum anderen auch bei axialen und radialen Unwuchten die Dichtlippe nicht übermäßig verschleißt.

Überraschenderweise hat sich gezeigt, dass eine axiale Abdichtung bei derartigen (Groß-) Wälzlagern möglich ist, da zum einen der Abstand zwischen dem Dichtungsträger und der Stirnseite des Innenrings hochpräzise eingestellt werden kann und damit die Anpresskraft des Dichtrings bzw. der Dichtlippe auf die axiale Stirnfläche des Lagerrings genau definiert werden kann und zum anderen auf zusätzliche Elemente, wie beispielsweise Federelemente, verzichtet werden kann. Dies erleichtert zum einen die Herstellung der Dichtungen und zum anderen kann auf eine zusätzliche Anpresskraft die auf die Dichtlippen wirkt und diese verschleißt, verzichtet werden.

Die axiale Abdichtung steht im Gegensatz zur gängigen Lehre der Fachleute, die davon ausgehen, dass eine axial anlaufende Dichtlippe nicht ausreichend abdichten kann. Grund dafür ist, dass Unwuchten bzw. die immer auftretenden Fertigungsungenauigkeiten (es ist schlicht nicht möglich, einen im mathematischen Sinne kreisrunden Ring zu fertigen) gerade bei Großwälzlagern zu großen Schwankungen im Abstand zwischen den sich zueinander drehenden Bauteile führen. Das Federelement der Radialwellendichtung wurde deshalb als unverzichtbar erachtet, da sonst nicht sichergestellt werden kann, dass eine Abdichtung in allen Betriebszuständen, das heißt ein Anliegen der Dichtlippe an dem Lagerring bzw. die Hülse, nicht erfolgen kann.

Es hat sich jedoch herausgestellt, dass auch axial anlaufende Dichtlippen den Lagerinnenraum zu allen Betriebszuständen ausreichend abdichten, insbesondere wenn ihre Anlagekraft über die Lebensdauer der Wälzlageranordnung genau bestimmt wird und die Dichtlippen entsprechend designt werden. Gemäß einem bevorzugten Ausführungsbeispiel liegt deshalb die primäre Dichtlippe mit einer vorbestimmten Anlagekraft an der Stirnfläche des zweiten Lagerrings an.

Dabei ist insbesondere bevorzugt, dass die Anlagekraft der primären Dichtlippe über eine Länge der Dichtlippe, einen Anstellwinkel der Dichtlippe bezüglich der Stirnfläche, ein Material der Dichtlippe, eine geometrische Ausgestaltung der Dichtlippe und/oder einen definierten Abstand des Dichtungsträgers zu der Stirnfläche des zweiten Lagerrings bestimmt ist. Die oben genannten Faktoren spielen allein oder in Kombination für die Anlagekraft der Dichtung an der Stirnfläche des Lagerrings eine entscheidende Rolle und können mithilfe von Simulationen genauer bestimmt werden.

Gemäß der Erfindung sind nicht nur die oben genannten Faktoren für die Bestimmung der Anlagekraft entscheidend, sondern auch ein Lippenspreizwinkel zwischen der primären Dichtlippe und der sekundären Dichtlippe, wobei die primäre Dichtlippe in Richtung des Innenraums gerichtet ist, während die sekundäre Dichtlippe in entgegengesetzter Richtung ausgerichtet ist. Der Lippenspreizwinkel, der im Bereich von 100° bis 140°, vorzugsweise bei ungefähr 120°, liegt, sorgt dafür, dass die Dichtlippen sich gegenseitig ausrichten, so dass die Dichtlippen grundsätzlich in Anlage an der Stirnfläche des Lagerrings sind.

Gemäß einem weiteren vorteilhaften Ausführungsbeispiel ist das Dichtelement aus Nitrilbutadienkautschuk oder hydriertem Acrylnitrilbutadienkautschuk hergestellt. Diese Materialien sind zum einen hochgradig elastisch und zum anderen ausreichend steif, um optimierte Anlagekraft bestimmende Eigenschaften für die Dichtlippen auszubilden. Des Weiteren zeigen ei eine hohe Resistenz gegen Ozon und können auch bei tiefen Temperaturen eingesetzt werden.

Gemäß einem weiteren vorteilhaften Ausführungsbeispiel ist das Dichtelement weiterhin ein Dichtungskörper, der die primäre Dichtlippe und die sekundäre Dichtlippe trägt, wobei der Dichtungskörper, die primäre und die sekundäre Dichtlippe, ein einstückiges Element ausbilden. Durch diese Einstückigkeit kann die Wechselwirkung zwischen dem Dichtlippenkörper, dem Dichtungsträger und der stirnseitigen Anlauffläche am Lagerinnenring eine konstante Anlage der Dichtlippen sicherstellen.

Gemäß einem weiteren vorteilhaften Ausführungsbeispiel ist der Dichtungsträger aus einem faserverstärkten Kunststoffmaterial, insbesondere einem GFK-Material hergestellt. Dadurch kann das Gewicht weiter reduziert werden, sodass das Gesamtgewicht des Lagers insgesamt reduziert ist. Zudem sind derartige Dichtungsträger sehr maßhaltig und leicht herzustellen und können einfach an den Lagerring befestigt werden. Selbstverständlich ist jedoch auch möglich, dass der Dichtungsträger, wie üblich, aus einem Blechmaterial hergestellt ist.

Um gerade bei Großwälzlagern die nötige Stabilität und Maßhaltigkeit zu erreichen, wird vorzugsweise der Dichtungsträger jedoch nicht wie üblich aus Lagen gefertigt, sondern wird aus einer Faser-Matrix-Verbund-Platte formgepresst (SMC-Verfahren). Eine Nachbearbeitung des Dichtungsträgers ist nicht nötig. Dadurch kann zum einen der Herstellungsprozess beschleunigt werden und zum anderen können Fehler, die durch fehlerhafte Laminierung des faserverstärkten Kunststoffs entstehen können, vermieden werden. Darüber hinaus kann mithilfe der formgepressten Faser-Matrix-Verbund-Platten eine große Formgenauigkeit erreicht werden, sodass die rein axiale Abdichtung statt dem Einsatz eines Radialwellendichtrings auch bei Großwälzlagern problemlos möglich ist.

Um den Dichtungsträger und das Dichtelement mit dem Dichtungskörper zu befestigen, wird üblicherweise der Dichtungskörper an einer Radialfläche des Dichtungsträgers angeordnet und erfindungsgemäß mittels eines Spannrings, der sich umfänglich erstreckt, an den Dichtungsträger befestigt. Dieser sich umfänglich erstreckende Spannring stellt sicher, dass das Dichtungselement radial und axial in einer vorbestimmten Lage gehalten wird, sodass die Dichtlippen mit einer definierten Anlagekraft an der Stirnseite des Lagerrings anlaufen.

Dabei kann der Spannring mittels Schrauben an dem Dichtungsträger befestigt sein.

Weiterhin ist möglich, das Dichtungselement zwischen Dichtungsträger und Spannring einzuklemmen. Alternativ oder zusätzlich kann das Dichtungselement mittels Kraftschluss, insbesondere mittels eines Befestigungselements, an dem Spannring angebracht sein. Zudem kann ebenfalls alternativ oder zusätzlich das Dichtungselement und der Dichtungsträger/Spannring formschlüssig miteinander wechselwirkende Strukturen aufweisen, die ebenfalls eine radiale und axiale Befestigungsmöglichkeit des Dichtungselements mit dem Spannring und/oder dem Dichtungsträger ermöglicht. Selbstverständlich ist es auch möglich, das Dichtungselement zusätzlich oder alternativ lediglich stoffschlüssig an den Spannring bzw. den Dichtungsträger anzubringen, wobei insbesondere ein Klebstoff zum Einsatz kommen kann.

Um weiterhin eine Verdrehsicherung von Dichtungsträger und Dichtungselement herzustellen bzw. eine radiale, axiale und umfängliche Lagesicherung durchzuführen, können das Dichtungselement und/oder der Dichtungsträger Strukturen aufweisen, um das Dichtungselement drehfest an den Dichtungsträger zu befestigen. Dabei ist insbesondere bevorzugt, wenn der Dichtungsträger eine Hinterschneidung aufweist und das Dichtungselement mit einer an dem Dichtungskörper ausgebildeten Nase in die Hinterschneidung eingreift, wodurch das Dichtungselement an dem Dichtungsträger festlegbar ist.

Ein weiterer Aspekt vorliegender Erfindung betrifft eine Windkraftanlage mit einer Rotorwellenhauptlagerung, die eine Wälzanordnung wie oben beschrieben aufweist.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine schematische perspektivische Teilansicht einer Wälzlageranordnung gemäß einem ersten Ausführungsbeispiel;
- Fig. 2:: eine schematische Schnittansicht der Wälzlageranordnung der Fig. 1;
- Fig. 3:: eine schematische perspektivische Detailansicht des in Fig. 1 und Fig. 2 verwendeten Dichtungselements;
- Fig. 4:: eine schematische Detailansicht eines in der Wälzlageranordnung verwendeten Dichtungsträgers;
- Fig. 5:: eine schematische Detailansicht eines alternativ verwendbaren Dichtungselements;
- Fig. 6:: eine schematische Detailansicht eines alternativ verwendbaren Dichtungselements; und
- Fig. 7:: eine schematische Detailansicht eines alternativ verwendbaren Dichtungselements.

Im Folgenden werden gleiche oder funktionell gleichwirkende Elemente mit denselben Bezugszeichen gekennzeichnet.

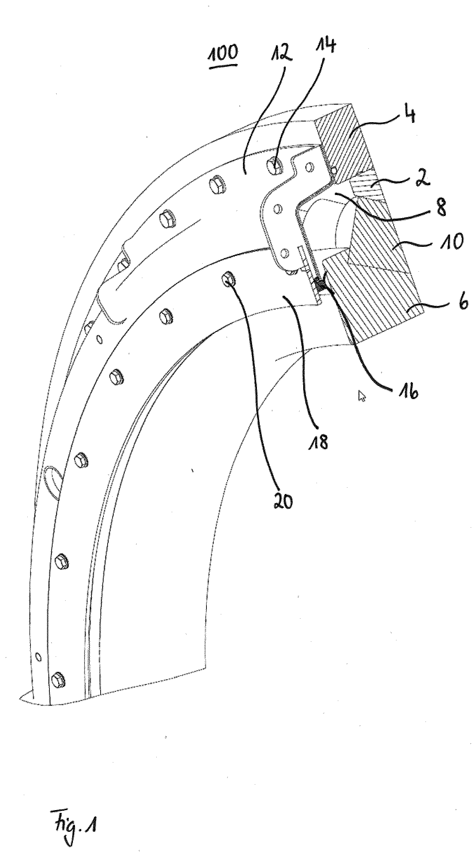

Fig. 1zeigt schematisch eine perspektivische Teilansicht einer Wälzlageranordnung 100 mit einem Außenring 2, der drehfest mit einer Welle 4 verbunden ist, und einem Innenring 6, wobei Außenring 2 und Innenring 6 zwischen sich einen Lagerinnenraum 8 ausbilden, in dem Wälzkörper 10 angeordnet sind.

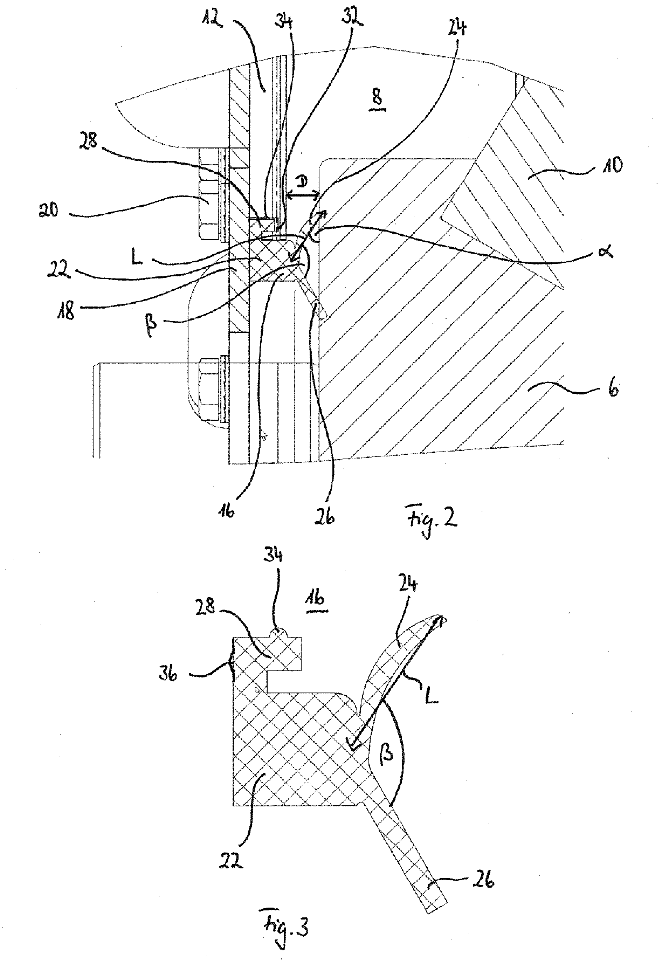

Um den Lagerrinnenraum 8 vor einer Kontamination durch Schmutz, Wasser oder allgemein Partikel zu schützen, und um ein optional in den Lagerinnenraum 8 befindliches Schmiermittel in dem Lagerinnenraum 8 zu halten, muss der Lagerinnenraum 8 nach außen hin abgedichtet sein. Dazu wird üblicherweise an dem Außenring 2 oder der Welle 4 ein Dichtungsträger 12 angebracht, der in dem in Fig. 1 gezeigten Ausführungsbeispiels mittels Schrauben 14 befestigt wird und den Lagerinnenraum 8 zumindest teilweise abdeckt. Der Dichtungsträger 12 erstreckt sich dabei von dem Lageraußenring 2 bzw. Welle 4 zu dem Lagerring 6 und trägt eine Dichtungselement 16. Diese Ausgestaltung ist vergrößert auch in der Schnittansicht der Fig. 2 dargestellt, wobei Fig. 2 aber nur den Lagerinnenring 6, den Wälzkörper 10, aber nicht den Außenring 2 zeigt. Des Weiteren ist in Fig. 2 der Dichtungsträger 12 dargestellt, der ein Dichtungselement 16 trägt.

In dem in den Fig. dargestellten Ausführungsbeispielen ist das Dichtungselement 16 als axiales Dichtungselement ausgestaltet. Es ist jedoch auch möglich, das Dichtungselement als Radialwellendichtring auszubilden.

Um das Dichtungselement 16 an dem Dichtungsträger 12 drehfest zu befestigen, ist weiterhin ein Spannring 18 vorgesehen, der umfänglich wiederum mittels Schrauben 20 an dem Dichtungsträger 12 befestigt ist, so dass das Dichtungselement 16 zwischen Dichtungsträger 12 und Spannring 18 eingeklemmt ist. Das Dichtungselement selbst ist ebenfalls mittels der Schrauben 20 an dem Spannring 18 in Umfangsrichtung drehfest und in axial definiertem Abstand zu dem Lagerinnenring 6 befestigt. Auf die verschiedenen Befestigungsmöglichkeiten wird weiter unten näher eingegangen.

Wie Fig. 2 und Fig. 3 zu entnehmen sind, weist das Dichtungselement 16 einen Dichtungskörper 22 auf, der eine primäre Dichtlippe 24 und eine sekundäre Dichtlippe 26 trägt. In dem dargestellten Ausführungsbeispiel sind Dichtungskörper 22 und Dichtlippen 24, 26 einstückig ausgebildet, es ist aber auch möglich das Dichtungselemente 16 aus mehreren Teilen zu fertigen. Der Dichtungskörper 22 hat in dem gezeigten Ausführungsbeispiel eine Struktur 28, in Form einer Nase, die mit dem Dichtungsträger 12 zusammenwirkt, um den Dichtungskörper 22 und damit das Dichtungselement 16 an dem Dichtungsträger 12 axial und radial zu sichern.

Weiterhin zeigt Fig. 2, dass die primäre Dichtlippe 24 und die sekundäre Dichtlippe 26 nicht wie üblich radial ausgerichtet sind, sondern axial an einer Stirnfläche 30 des Innenrings 6 anlaufen. Dies ist insofern ungewöhnlich, da bis jetzt die Fachleute davon ausgegangen sind, dass eine axiale Dichtung bzw. eine axial anlaufende primäre Dichtung 24 keine ausreichende Anlagekraft an der Stirnfläche 30 oder einer anderen Axialfläche aufbringen könne, um den Lagerinnenraum 8 sicher und zuverlässig vor einer Kontamination von außen zu schützen und ein optional im Lagerinnenraum 8 befindliches Schmiermittel in ihm zu halten.

Es hat sich jedoch überraschenderweise herausgestellt, dass die Dichtlippe derart ausgebildet werden kann, dass sie eine ausreichende Anlagekraft auch in axialer Richtung aufbringen kann. Neben dem Abstand D zwischen Dichtungsträger 12 und Stirnseite 30 spielen dabei auch das Material des Dichtungselements und insbesondere der primären Dichtlippe, ihre Länge L1, ihr Anstellwinkel α bezüglich der Stirnfläche 30, ihre geometrische Ausgestaltung und ihr Spreizwinkel β zu der sekundären Dichtlippe 26 eine entscheidenden Rolle. Um eine besonders gute Anlagekraft zu erhalten, wird für das Dichtungselement die erreichte Anlagekraft und ihr Verhalten über die gesamte Lebensdauer des Lagers simuliert und die Parameter dementsprechend angepasst.

So zeigt beispielsweise die in Fig. 2 und vergrößert in Fig. 3 dargestellte primäre Dichtlippe 24 eine geometrische Ausgestaltung mit leicht nach außen gewölbter und in der Mitte verdickter Form und weist zu der sekundären Dichtlippe 26 einen Lippenspreizwinkel β von ungefähr 120° auf. Des Weiteren wird der Abstand D zwischen Dichtungsträger 12 und Stirnfläche 30 des Lagerinnenrings 6 derart eingestellt, dass auch bei großer Belastung und langer Lebensdauer die Dichtlippe 24 immer in Kontakt mit der Stirnfläche 30 ist. Weiterhin ist bevorzugt, dass der Anstellwinkel α der primären Dichtlippe 24 zur Stirnfläche 30 des Lagerinnenrings 6 ungefähr im Bereich zwischen 20° und 60° liegt. Weiterhin hat sich als bevorzugt herausgestellt, das Dichtungselement und insbesondere die primäre Dichtlippe 24 aus einem elastischen Material, vorzugsweise Nitrilbutadienkautschuk oder hydriertem Acrylnitrilbutadienkautschuk herzustellen. Diese Materialien haben eine ausreichende Festigkeit, hohe Elastizität und große Glätte, sodass die Dichtlippe über ihre Lebensdauer dichtend an der Stirnfläche 30 anliegt, ohne aufgrund zu hohem Reibmoment beschädigt zu werden oder die Rotation der Lagerkomponenten zu behindern. Zudem zeigen diese Materialien eine hohe Resistenz gegenüber Ozon und können auch bei tiefen Temperaturen eingesetzt werden.

Um das Dichtungselement 16 an den Dichtungsträger 12 zu befestigen, ist in dem Ausführungsbeispiel von Fig. 2 weiterhin dargestellt, dass der Dichtungsträger 12 eine Hinterschneidung 32 aufweist, die mit der Struktur 28, d.h. der Nase, des Dichtungskörpers 22 zusammenwirkt, um das Dichtungselement 16 radial und axial zu sichern. Weiterhin bildet die Hinterschneidung zusammen mit der Nase 28 eine Art Labyrinthdichtung, die den Lagerinnenraum 8 weiterhin abdichtet. Um den Lagerinnenraums 8 zusätzlich abzudichten ist, wie insbesondere auch der vergrößerten Darstellung der Dichtlippen in Fig. 3 zu entnehmen, an dem Dichtungselement 16 im Bereich der Struktur 28 eine sich radial erstreckende Auskragung 34 und im Bereich des Dichtungskörpers 22 eine sich axial erstreckende Auskragung 36 ausgebildet, für eine zusätzliche Abdichtung zwischen Dichtungselement 16 und Spannring 18 bzw. Dichtungsträger 12 sorgen. Zusätzlich kann der Dichtungskörpers 22 auch mit dem Spannring 18 und/oder dem Dichtungsträger verklebt sein.

Wie oben schon erwähnt, ist für die Festlegung der Anlagekraft der primären Dichtlippe 24 unter anderem der Abstand D zwischen dem Dichtungsträger 12 und der Stirnfläche 30 des Lagerinnenrings ausschlaggebend. Der Dichtungsträger 12 wird bei den aus dem Stand der Technik bekannten Lagern aus einem Metallblech gefertigt, das sich jedoch gerade bei Großwälzlagern leicht verbiegt, so dass bei herkömmlichen Lagern der Abstand D über den Umfang stark variiert. Diese Variation führt dazu, dass bei einer axial anlaufenden Dichtung die primäre Dichtlippe 24 nicht immer an der Stirnfläche 30 des Lagerinnenrings 6 anliegt, sondern von dieser beabstandet ist. Eine axiale Dichtungsanordnung wurde deshalb von den Fachleuten nie in Betracht gezogen.

Um die axiale Unwucht möglichst zu verringern, wird deshalb weiterhin vorgeschlagen, den Dichtungsträger 12 nicht, wie aus dem Stand der Technik bekannt, aus einem Blechmaterial, sondern aus einem faserverstärkten Kunststoff, insbesondere aus glasfaserverstärktem Kunststoff (GFK) zu fertigen. GFK hat die Eigenschaft, dass es zum einen leicht ist, wodurch das Gesamtgewicht des Großwälzlagers reduziert werden kann, zum anderen aber sehr stabil und frei von Deformationen ist, sodass auch bei großen Wälzlagern der Abstand D zwischen Dichtungsträger 12 und Stirnfläche 30 genau eingestellt und über den Umfang gleich gehalten werden kann. Dabei hat sich als vorteilhaft herausgestellt, das GFK-Material nicht, wie übliche, zu laminieren, sondern aus einer Faser-Matrix-Verbund-Platte formzupressen, was insbesondere die Maßhaltigkeit und Präzision der Fertigung erhöht.

Des Weiteren kann der Dichtungsträger 12 einteilig oder mehrteilig ausgebildet sein und während des Herstellungsprozesses können weitere Strukturen, wie beispielsweise Entlüftungsbohrungen, Schmiermittelversorgungsbohrungen, Endoskopiebohrungen etc. direkt miteingeformt werden.

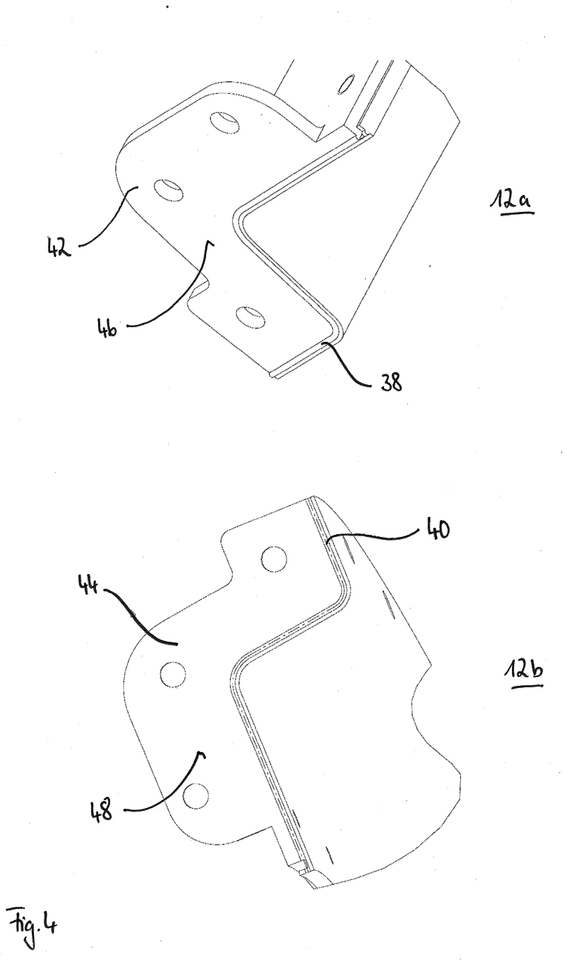

Bei einer mehrteiligen Ausführung ist es zudem vorteilhaft, dass, wie in Fig. 4 dargestellt, zwei aneinander anstoßende, benachbarte Dichtungsträgersegmentteile 12a, 12b zu einander komplementäre Strukturen 38, 40 aufweisen. In dem in Fig. 4 dargestellten Ausführungsbeispiel sind die zueinander komplementären Strukturen durch eine Auskragung 38 und eine entsprechend ausgestaltete Nut 40 realisiert, die beim Zusammenbau ineinandergreifen und die Dichtungsträgersegmente 12a, 12b radial und axial aneinander ausrichten. Weiterhin kann an den Dichtungsträgersegmenten 12a, 12b je ein Flanschelement 42, 44 angebracht sein, die beispielsweise miteinander verschraubt werden können, um die Dichtungsträgersegmente 12a, 12b miteinander zu verbinden. Zusätzlich können die Stoßflächen 46, 48 der Dichtungsträgersegmente, insbesondere die Flanschflächen, mit einem Dichtmaterial, insbesondere einer Flüssigkeitsdichtung beschichtet sein, um die Dichtigkeit des Dichtungsträgers 12 in Umfangsrichtung sicherzustellen. Die Dichtungsträgersegmente 12a, 12b können auch miteinander lediglich verklebt sein, wobei der Kleber dann sowohl die Befestigungs- als auch die Abdichtungsfunktion übernehmen kann.

Statt der dargestellten Nut-und-Feder-Verbindung ist es selbstverständlich auch möglich, andere geeignete komplementäre Strukturen auszubilden, um eine radiale, axiale und/oder umfängliche Festlegung und Ausrichtung der Dichtungsträgersegmente zueinander zu ermöglichen. Dabei ist aber besonders vorteilhaft, wenn die komplementären Strukturen zumindest einen radialen und einen axialen Anschlag aufweisen, sodass die Ausrichtung der Dichtungsträgersegmente vereinfacht ist.

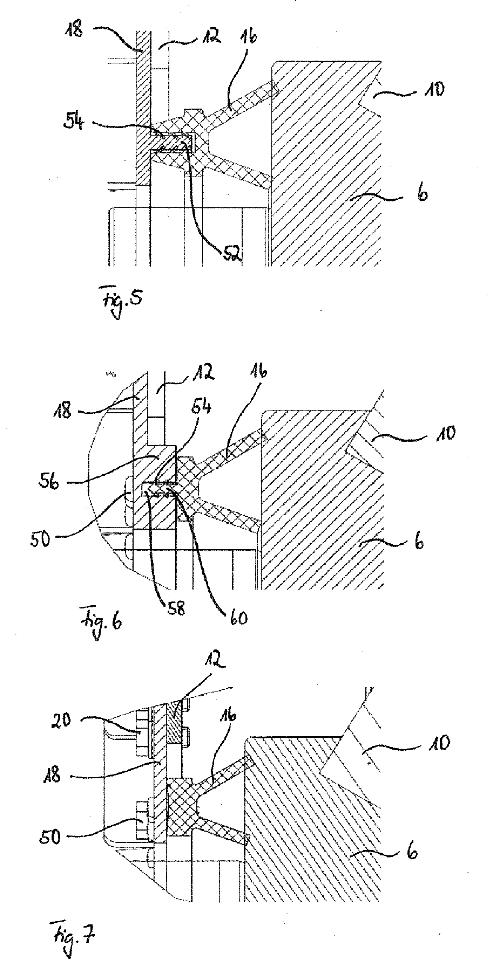

Die Figuren 5, 6 und 7 zeigen weitere alternative Befestigungsmöglichkeiten für das Dichtungselement 16 an dem Dichtungsträger 12 bzw. dem Spannelement 18. Bei den gezeigten anderen Ausführungsformen ist das Dichtungselement 16 lediglich mit dem Spannelement 18 verbunden und ist nicht direkt an dem Dichtungsträger 12 befestigt. So zeigen die Figuren 5 und 6 jeweils Ausgestaltungen, bei denen das Dichtungselement 16 und der Spannring 18 form- und reibschlüssig miteinander verbunden sind. Dabei ist in Fig. 5 eine reine form- und reibschlüssige Ausgestaltung gezeigt, während in Fig. 6 der Form- bzw. Reibschluss durch einen Kraftschluss mit Hilfe zusätzlicher Befestigungselemente 50 ergänzt wird. In Fig. 5 weist der Spannring 18 eine Auskragung 52 auf, an der das Dichtungselement 16, das mit Widerhaken 54 ausgestattet ist, angeklemmt wird. In dem Ausgestaltungsbeispiel der Fig. 6 weist dagegen der Spannring 18 eine Verdickung 56 mit einer Nut 58 auf, in die ein Fortsatz 60 des Dichtungselements, der ebenfalls mit Widerhaken 54 ausgestattet ist, eingreift. Zusätzlich sind die Befestigungselemente 50 vorgesehen, die das Dichtungselement 16 an dem Spannring 18 drehfest befestigen. Selbstverständlich kann das Dichtungselement 16 an dem Spannring 18 auch nur mit den Schrauben 50 angeschraubt sein, wie es beispielsweise in Fig. 7 dargestellt ist.

Eine Wälzlageranordnung, wie in den Figuren 1 bis 7 beschrieben, ist insbesondere dann vorteilhaft, wenn der Innenring feststehend und der Außenring drehend ausgebildet ist, es kann aber auch bei feststehendem Außenring und drehendem Innenring eingesetzt werden.

Insgesamt kann mit der vorgestellten Wälzlageranordnung eine Großwälzlageranordnung bereitgestellt werden, die bei Durchmessern über einem Meter sowohl eine Gewichtsersparnis als auch eine verbesserte Dichtleistung ermöglicht. Die Kombination aus GFK-Material, das insbesondere aus einer Faserverbundplatte formgepresst ist, und der axial anlaufenden Dichtung ermöglicht eine optimierte axiale Dichtung, da durch den GFK-Dichtungsträger eine besonders genaue Einstellung des Abstands zwischen Dichtungsträger und Stirnfläche des Innenrings möglich ist.

### Bezugszeichenliste

- 100: Wälzlageranordnung
- 2: Außenring
- 4: Welle
- 6: Innenring
- 8: Lagerinnenraum
- 10: Wälzkörper
- 12: Dichtungsträger
- 14: Schrauben
- 16: Dichtungselement
- 18: Spannring
- 20: Schrauben
- 22: Dichtungskörper
- 24: primäre Dichtungslippe
- 26: sekundäre Dichtungslippe
- 28: Struktur
- 30: Stirnfläche
- 32: Hinterschneidung
- 34, 36: Dichtungsauskragung
- 38, 40: komplementäre Strukturen
- 42, 44: Flanschelement
- 46, 48: Stoßflächen
- 50: Befestigungselemente
- 52: Auskragung
- 54: Widerhaken
- 56: Verdickung
- 58: Nut
- 60: Fortsatz
- D: Abstand
- L: Länge
- α: Anstellwinkel
- β: Lippenspreizwinkel

## Patentansprüche

1. Wälzlageranordnung (100), insbesondere zweireihiges Kegelrollenlager, mit einem ersten Lagerring (2; 6) und einem zweiten Lagerring (2; 6), die zwischen sich einen Lagerinnenraum (8) bilden, in dem Wälzkörper angeordnet sind, um eine relative Verdrehung von erstem und zweiten Lagerring (2; 6) zu ermöglichen, wobei die Wälzlageranordnung (100) weiterhin eine Dichtanordnung zum Abdichten des Lagerinnenraums (8) aufweist, wobei die Dichtanordnung einen separaten Dichtungsträger (12) aufweist, der drehfest mit dem ersten Lagerring (2; 6) verbunden ist, sich von dem ersten Lagerring zu dem zweiten Lagerring erstreckt und zumindest teilweise den Lagerinnenraum abdeckt, und weiterhin ein Dichtungselement (16) mit zumindest einer primären Dichtlippe (24) zum Abdichten des Lagerinnenraums (8) und einer sekundären Dichtlippe (26) zum Abdichten gegen externe Kontamination aufweist, wobei das Dichtungselement (16) drehfest mit dem Dichtungsträger (12) verbunden ist, wobei die primäre und die sekundäre Dichtlippe (24; 26) axial dichtend an einer Stirnfläche (30) des zweiten Lagerrings (2; 6) anliegen, **dadurch gekennzeichnet, dass** die primäre Dichtlippe (24) in Richtung des Lagerinnenraums (8) gerichtet ist und die zweite Dichtlippe (26) in eine entgegengesetzte Richtung gerichtet ist, so dass die primäre und die sekundäre Dichtlippe (24; 26) einen Lippenspreizwinkel (β) zwischen sich bilden, der im Bereich von 100° bis 140°, vorzugsweise bei 120°, liegt, und wobei das Dichtungselement (16) mittels eines Spannrings (18), der sich umfänglich erstreckt, an dem Dichtungsträger (12) befestigt ist.

2. Wälzlageranordnung (100) nach Anspruch 1, wobei der erste Lagerring (2; 6) feststehend und der zweite Lagerring (6; 2) rotierend ausgebildet sind.

3. Wälzlageranordnung (100) nach Anspruch 1 oder 2, wobei das Dichtungselement (16) weiterhin einen Dichtungskörper (22) aufweist, der die primäre Dichtlippe (24) und die sekundäre Dichtlippe (26) trägt, wobei der Dichtungskörper (22), die primäre und die sekundäre Dichtlippe (24; 26) ein einstückiges Element ausbilden.

4. Wälzlageranordnung (100) nach einem der vorhergehenden Ansprüche, wobei die primäre Dichtlippe (24) mit einer vorbestimmten Anlagekraft an der Stirnfläche (30) des zweiten Lagerrings (2; 6) anliegt.

5. Wälzlageranordnung (100) nach einem der vorhergehenden Ansprüche, wobei die Anlagekraft der primären Dichtlippe (24) über eine Länge (L) der Dichtlippe (24), einen Anstellwinkel (• ) der Dichtlippe (24) bezüglich der Stirnfläche (30), ein Material der Dichtlippe (24), eine geometrische Ausgestaltung der Dichtlippe (24), und/oder einem definierten Abstand (D) des Dichtungsträgers (12) zu der Stirnfläche (30) des zweiten Lagerrings (2; 6) bestimmt ist.

6. Wälzlageranordnung (100) nach einem der vorhergehenden Ansprüche, wobei das Dichtelement aus Nitrilbutadien-Kautschuk (NBR) oder hydriertem Acrylnitrilbutadien-Kautschuk (HNBR) hergestellt ist.

7. Wälzlageranordnung (100) nach einem der vorhergehenden Ansprüche, wobei der Dichtungsträger (12) aus einem faserverstärkten Kunststoffmaterial, insbesondere einem GFK Material, hergestellt ist.

8. Wälzlageranordnung (100) nach einem der vorhergehenden Ansprüche, wobei das Dichtungselement (16) mit dem Dichtungskörper (22) an einer Radialfläche des Dichtungsträgers (12) anliegt.

9. Wälzlageranordnung (100) nach einem der vorhergehenden Ansprüche, wobei der Spannring (18) mittels Schrauben mit dem Dichtungsträger (12) befestigt ist.

10. Wälzlageranordnung (100) nach einem der vorgehenden Ansprüche, wobei
das Dichtungselement (16) zwischen Dichtungsträger (12) und Spannring (18) eingeklemmt ist, und/oder
das Dichtungselement (16) mittels Kraftschluss, insbesondere mittels eines Befestigungselements, an dem Spannring (18) angebracht ist, und/oder
das Dichtungselement (16) und der Spannring (18) formschlüssig miteinander wechselwirkende Strukturen (52; 54; 56; 58) aufweisen, um das Dichtungselement (16) und den Spannring (18) formschlüssig mit einander zu verbinden, und/oder
das Dichtungselement (16) stoffschlüssig, insbesondere mittels Kleben, an dem Spannring (18) angebracht ist.

11. Wälzlageranordnung (100) nach einem der vorhergehend Ansprüche, wobei das Dichtungselement (16) und/oder der Dichtungsträger (12) Strukturen (28; 32) aufweisen, um das Dichtungselement (16) drehfest an dem Dichtungsträger (12) zu befestigen, wobei insbesondere der Dichtungsträger (12) eine Hinterschneidung (32) aufweist, und das Dichtungselement (16), insbesondere mit dem Dichtungskörper (22), mit einer an dem Dichtungskörper ausgebildet Nase (28) in die Hinterschneidung (32) eingreift, um das Dichtungselement (16) an dem Dichtungsträger (12) festzulegen.

## Claims

1. Anti-friction bearing arrangement (100), in particular double-row tapered roller bearing, with a first bearing ring (2; 6) and a second bearing ring (2; 6) which, between them, form a bearing interior space (8), in which rolling bodies are arranged, in order to make a relative rotation of the first and second bearing ring (2; 6) possible, the anti-friction bearing arrangement (100) having, furthermore, a sealing arrangement for sealing the bearing interior space (8), the sealing arrangement having a separate seal carrier (12) which is connected fixedly to the first bearing ring (2; 6) for conjoint rotation, extends from the first bearing ring to the second bearing ring, and covers the bearing interior space at least partially, and has, furthermore, a seal element (16) with at least one primary sealing lip (24) for sealing the bearing interior space (8) and one secondary sealing lip (26) for sealing against external contamination, the seal element (16) being connected fixedly to the seal carrier (12) for conjoint rotation, the primary and the secondary sealing lip (24; 26) bearing axially against an end face (30) of the second bearing ring (2; 6) in a sealing manner, **characterized in that** the primary sealing lip (24) is directed in the direction of the bearing interior space (8), and the second sealing lip (26) is directed in an opposite direction, with the result that the primary and the secondary sealing lip (24; 26) form, between them, a lip spread angle (β) which lies in the range from 100° to 140°, preferably at 120°, and the seal element (16) being fastened to the seal carrier (12) by means of a clamping ring (18) which extends circumferentially.

2. Anti-friction bearing arrangement (100) according to Claim 1, the first bearing ring (2; 6) being of stationary configuration, and the second bearing ring (6; 2) being of rotating configuration.

3. Anti-friction bearing arrangement (100) according to Claim 1 or 2, the seal element (16) having, furthermore, a seal body (22) which supports the primary sealing lip (24) and the secondary sealing lip (26), the seal body (22), the primary and the secondary sealing lip (24; 26) configuring one single-piece element.

4. Anti-friction bearing arrangement (100) according to one of the preceding claims, the primary sealing lip (24) bearing with a predetermined bearing force against the end face (30) of the second bearing ring (2; 6).

5. Anti-friction bearing arrangement (100) according to one of the preceding claims, the bearing force of the primary sealing lip (24) being determined over a length (L) of the sealing lip (24), a setting angle (•) of the sealing lip (24) with regard to the end face (30), a material of the sealing lip (24), a geometrical configuration of the sealing lip (24), and/or a defined spacing (D) of the seal carrier (12) from the end face (30) of the second bearing ring (2; 6).

6. Anti-friction bearing arrangement (100) according to one of the preceding claims, the sealing element being produced from nitrile butadiene rubber (NBR) or hydrated acrylonitrile butadiene rubber (HNBR).

7. Anti-friction bearing arrangement (100) according to one of the preceding claims, the seal carrier (12) being produced from a fibre-reinforced plastic material, in particular a GFRP material.

8. Anti-friction bearing arrangement (100) according to one of the preceding claims, the seal element (16) bearing by way of the seal body (22) against a radial face of the seal carrier (12).

9. Anti-friction bearing arrangement (100) according to one of the preceding claims, the clamping ring (18) being fastened to the seal carrier (12) by means of screws.

10. Anti-friction bearing arrangement (100) according to one of the preceding claims,
the seal element (16) being clamped in between the seal carrier (12) and the clamping ring (18), and/or
the seal element (16) being attached to the clamping ring (18) by means of a non-positive connection, in particular by means of a fastening element, and/or
the seal element (16) and the clamping ring (18) having structures (52; 54; 56; 58) which interact with one another in a positively locking manner, in order to connect the seal element (16) and the clamping ring (18) to one another in a positively locking manner, and/or
the seal element (16) being attached to the clamping ring (18) in an integrally joined manner, in particular by means of adhesive bonding.

11. Anti-friction bearing arrangement (100) according to one of the preceding claims, the seal element (16) and/or the seal carrier (12) having structures (28; 32), in order to fasten the seal element (16) fixedly to the seal carrier (12) for conjoint rotation, the seal carrier (12) having, in particular, an undercut (32), and the seal element (16) engaging, in particular by way of the seal body (22), by way of a lug (28) which is configured on the seal body into the undercut (32), in order to fix the seal element (16) on the seal carrier (12).

## Revendications

1. Agencement de palier à roulement (100), notamment roulement à rouleaux coniques à deux rangées, comprenant une première bague de roulement (2 ; 6) et une deuxième bague de roulement (2 ; 6), qui forment entre elles un espace intérieur de roulement (8) dans lequel sont agencés des éléments roulants afin de permettre une rotation relative de la première et de la deuxième bague de roulement (2 ; 6), l'agencement de palier à roulement (100) présentant en outre un agencement d'étanchéité pour étanchéifier l'espace intérieur de roulement (8), l'agencement d'étanchéité présentant un support de joint d'étanchéité séparé (12), qui est relié de manière solidaire en rotation à la première bague de roulement (2 ; 6), s'étend de la première bague de roulement à la deuxième bague de roulement et couvre au moins partiellement l'espace intérieur de roulement, et présentant en outre un élément d'étanchéité (16) comprenant au moins une lèvre d'étanchéité primaire (24) pour étanchéifier l'espace intérieur de roulement (8) et une lèvre d'étanchéité secondaire (26) pour étanchéifier contre la contamination extérieure, l'élément d'étanchéité (16) étant relié de manière solidaire en rotation au support de joint d'étanchéité (12), la lèvre d'étanchéité primaire et la lèvre d'étanchéité secondaire (24 ; 26) s'appuyant axialement de manière étanche contre une surface frontale (30) de la deuxième bague de roulement (2 ; 6), **caractérisé en ce que** la lèvre d'étanchéité primaire (24) est dirigée en direction de l'espace intérieur de roulement (8) et la deuxième lèvre d'étanchéité (26) est dirigée dans une direction opposée, de telle sorte que la lèvre d'étanchéité primaire et la lèvre d'étanchéité secondaire (24 ; 26) forment un angle d'écartement des lèvres (β) entre elles, qui se situe dans la plage allant de 100° à 140°, de préférence de 120°, et l'élément d'étanchéité (16) étant fixé au support de joint d'étanchéité (12) au moyen d'une bague de serrage (18) qui s'étend sur la circonférence.

2. Agencement de palier à roulement (100) selon la revendication 1, la première bague de roulement (2 ; 6) étant configurée sous forme fixe et la deuxième bague de roulement (6 ; 2) étant configurée sous forme rotative.

3. Agencement de palier à roulement (100) selon la revendication 1 ou 2, l'élément d'étanchéité (16) présentant en outre un corps d'étanchéité (22) qui porte la lèvre d'étanchéité primaire (24) et la lèvre d'étanchéité secondaire (26), le corps d'étanchéité (22), la lèvre d'étanchéité primaire et la lèvre d'étanchéité secondaire (24 ; 26) formant un élément d'un seul tenant.

4. Agencement de palier à roulement (100) selon l'une quelconque des revendications précédentes, la lèvre d'étanchéité primaire (24) s'appuyant avec une force d'appui prédéterminée sur la surface frontale (30) de la deuxième bague de roulement (2 ; 6).

5. Agencement de palier à roulement (100) selon l'une quelconque des revendications précédentes, la force d'appui de la lèvre d'étanchéité primaire (24) étant déterminée par le biais d'une longueur (L) de la lèvre d'étanchéité (24), d'un angle d'inclinaison (•) de la lèvre d'étanchéité (24) par rapport à la surface frontale (30), d'un matériau de la lèvre d'étanchéité (24), d'une configuration géométrique de la lèvre d'étanchéité (24), et/ou d'une distance définie (D) du support de joint d'étanchéité (12) par rapport à la surface frontale (30) de la deuxième bague de roulement (2 ; 6).

6. Agencement de palier à roulement (100) selon l'une quelconque des revendications précédentes, l'élément d'étanchéité étant fabriqué en caoutchouc de nitrile-butadiène (NBR) ou en caoutchouc d'acrylonitrile-butadiène hydrogéné (HNBR).

7. Agencement de palier à roulement (100) selon l'une quelconque des revendications précédentes, le support de joint d'étanchéité (12) étant fabriqué en un matériau plastique renforcé par des fibres, notamment un matériau GFK.

8. Agencement de palier à roulement (100) selon l'une quelconque des revendications précédentes, l'élément d'étanchéité (16) s'appuyant avec le corps d'étanchéité (22) sur une surface radiale du support de joint d'étanchéité (12).

9. Agencement de palier à roulement (100) selon l'une quelconque des revendications précédentes, la bague de serrage (18) étant fixée au support de joint d'étanchéité (12) au moyen de vis.

10. Agencement de palier à roulement (100) selon l'une quelconque des revendications précédentes, l'élément d'étanchéité (16) étant serré entre le support de joint d'étanchéité (12) et la bague de serrage (18), et/ou
l'élément d'étanchéité (16) étant disposé sur la bague de serrage (18) au moyen d'une liaison à force, notamment au moyen d'un élément de fixation, et/ou
l'élément d'étanchéité (16) et la bague de serrage (18) présentant des structures (52 ; 54 ; 56 ; 58) interagissant entre elles par complémentarité de forme, afin de relier l'élément d'étanchéité (16) et la bague de serrage (18) l'un à l'autre par complémentarité de forme, et/ou
l'élément d'étanchéité (16) étant disposé sur la bague de serrage (18) par liaison de matière, notamment au moyen d'un collage.

11. Agencement de palier à roulement (100) selon l'une quelconque des revendications précédentes, l'élément d'étanchéité (16) et/ou le support de joint d'étanchéité (12) présentant des structures (28 ; 32) afin de fixer l'élément d'étanchéité (16) au support de joint d'étanchéité (12) de manière solidaire en rotation, le support de joint d'étanchéité (12) présentant notamment une contre-dépouille (32), et l'élément d'étanchéité (16), notamment avec le corps d'étanchéité (22), s'engageant dans la contre-dépouille (32) avec un nez (28) formé sur le corps d'étanchéité afin de fixer l'élément d'étanchéité (16) au support de joint d'étanchéité (12).
